# EUROPÄISCHE PATENTSCHRIFT

(11) **EP 4 168 841 B1**
(45) Veröffentlichungstag und Bekanntmachung des Hinweises auf die Patenterteilung: **03.12.2025**
(21) Anmeldenummer: 20734860.8
(22) Anmeldetag: 18.06.2020
(51) Int. Cl.: H05G 2/00, G02B 7/00, G02B 7/02, G02B 7/182

(54) **JUSTIERBARE OPTISCHE ANORDNUNG**
ADJUSTABLE OPTICAL ASSEMBLY
ENSEMBLE OPTIQUE RÉGLABLE

(43) Veröffentlichungstag der Anmeldung: 26.04.2023
(73) Patentinhaber: TRUMPF Lasersystems for Semiconductor Manufacturing SE, 71254 Ditzingen (DE)
(72) Erfinder: BURGER, Dieter, 71665 Vaihingen an der Enz (DE); ERICHSON, Oliver, 71634 Ludwigsburg (DE); MUELLER, Jonathan, 70199 Stuttgart (DE); WECKER, Matthias, 71229 Leonberg-Hoefingen (DE)
(74) Vertreter: Trumpf Patentabteilung
(86) Internationale Anmeldenummer: PCT/EP2020/066868
(87) Internationale Veröffentlichungsnummer: WO 2021/254614

(56) Entgegenhaltungen:
- EP-A1- 3 441 981
- WO-A1-2015/106303
- CN-A- 104 071 072
- US-A- 5 859 947

## Beschreibung

### Hintergrund der Erfindung

Die Erfindung betrifft eine justierbare optische Anordnung aufweisend eine Optikfassung, ein optisches Element, das an der Optikfassung gehalten ist, eine Haltestruktur, wobei die Optikfassung in einem Kugelgelenk an der Haltestruktur gehalten ist, wobei eine erste Justageeinrichtung vorgesehen ist, um die Optikfassung um eine erste Achse gegenüber der Haltestruktur zu verschwenken, und wobei eine zweite Justageeinrichtung vorgesehen ist, um die Optikfassung um eine zweite Achse gegenüber der Haltestruktur zu verschwenken.

Eine solche Anordnung ist aus US 3,897,139 A bekannt. Bei dieser bekannten Anordnung ist ein Spiegel in der Mitte einer quadratischen Montageplatte angeordnet. Ein Kugelgelenk und zwei Justageeinrichtungen sind an den Ecken der quadratischen Montageplatte angeordnet und verbinden die Montageplatte mit einer Haltestruktur. Das Kugelgelenk und die beiden Justageeinrichtungen sind gleich weit vom Spiegel entfernt und jeweils unmittelbar neben dem Spiegel angeordnet. Weiterer Stand der Technik ist aus der EP 3 441 981 A1 bekannt.

### Aufgabe der Erfindung

Es ist eine Aufgabe der Erfindung, eine optische Anordnung mit verbesserter Zugänglichkeit zur Justage eines optischen Elements anzugeben.

### Beschreibung der Erfindung

Diese Aufgabe wird erfindungsgemäß gelöst durch eine Anordnung gemäß Anspruch 1. In den Unteransprüchen und der Beschreibung sind vorteilhafte Ausführungsformen beschrieben.

Erfindungsgemäß ist eine justierbare optische Anordnung vorgesehen. Die optische Anordnung weist eine Optikfassung und ein optisches Element auf, das an der Optikfassung gehalten ist. Das optische Element kann eine Linse sein. Vorzugsweise ist das optische Element ein Spiegel.

Die optische Anordnung weist ferner eine Haltestruktur auf. Die Optikfassung ist an der Haltestruktur gehalten. Beim Justieren wird die Ausrichtung der Optikfassung mit dem optischen Element gegenüber der Haltestruktur verändert und definiert eingestellt. Zum Halten der Optikfassung an der Haltestruktur ist ein Kugelgelenk vorgesehen. Das Kugelgelenk lässt eine Bewegung der Optikfassung relativ zur Haltestruktur in allen rotatorischen Freiheitsgraden zu, schränkt jedoch alle translatorischen Freiheitsgrade ein.

Um eine definierte Ausrichtung der Optikfassung relativ zu der Haltestruktur einrichten zu können, sind zwei Justageeinrichtungen vorgesehen. Mit einer ersten Justageeinrichtung kann die Optikfassung um eine erste Achse gegenüber der Haltestruktur verschwenkt werden. Mit einer zweiten Justageeinrichtung kann die Optikfassung um eine zweite Achse gegenüber der Haltestruktur verschwenkt werden. Die erste und die zweite Achse sind grundsätzlich nicht parallel zueinander ausgerichtet. Die erste und die zweite Achse können einen Winkel zwischen 10° und 170° miteinander einschließen. Vorteilhaft sind Winkel von etwa 90°. Vorzugsweise kann der Winkel zwischen der ersten und der zweiten Achse zwischen 75° und 105° betragen. Die erste und die zweite Achse verlaufen grundsätzlich durch das Kugelgelenk. Dadurch kann ein Verspannen der Optikfassung beim Justieren vermieden werden. Vorzugsweise definieren die erste und die zweite Justageeinrichtung die Ausrichtung der Optikfassung zu der Haltestruktur lediglich bezüglich Rotationen um die erste bzw. zweite Achse; alle anderen Freiheitsgrade werden durch die erste bzw. zweite Justageeinrichtung typischerweise jeweils nicht eingeschränkt.

Erfindungsgemäß ist das Kugelgelenk zwischen dem optischen Element und der ersten und der zweiten Justageeinrichtung angeordnet. Die beiden Justageeinrichtungen sind mit anderen Worten vom optischen Element aus gesehen jenseits des Kugelgelenks angeordnet. Das Kugelgelenk ist mithin näher am optischen Element angeordnet als die Justageeinrichtungen. Dies vereinfacht den Zugang zu den beiden Justageeinrichtungen, um die Ausrichtung des optischen Elements durch Betätigen einer oder beider der Justageeinrichtungen einzustellen. Insbesondere kann zwischen den beiden Justageeinrichtungen und dem optischen Element, vorzugsweise nahe am Kugelgelenk, eine gasdichte und/oder optisch dichte Abschirmung vorgesehen sein, ohne dass dadurch der Zugriff auf die Justageeinrichtungen eingeschränkt würde. Die erste Achse kann durch eine Gerade durch das Kugelgelenk und die zweite Justageeinrichtung definiert sein. Die zweite Achse kann durch eine Gerade durch das Kugelgelenk und die erste Justageeinrichtung definiert sein.

Das Kugelgelenk liegt vorteilhafterweise möglichst dicht an einem optischen Mittelpunkt des optischen Elements. Typischerweise ist das Kugelgelenk gerade außerhalb des Außendurchmessers des optischen Elements angeordnet. Denkbar ist auch, dass das Kugelgelenk hinter dem optischen Element angeordnet ist, falls das optische Element nicht transmittierend, d. h. ein Spiegel, ist.

Die Abstände der beiden Justageeinrichtungen von dem Kugelgelenk sind vorteilhafterweise gleich groß. Typischerweise sind die Abstände der beiden Justageeinrichtungen von dem Kugelgelenk größer als der Abstand des Kugelgelenks vom optischen Mittelpunkt des optischen Elements, vorzugsweise wenigstens doppelt so groß.

Die Optikfassung wird durch ein längssteifes Führungselement an der Haltestruktur geführt.

Durch das Führungselement ist eine definierte Drehstellung der Optikfassung zu der Haltestruktur bezüglich einer dritten Achse eingerichtet. Die dritte Achse verläuft grundsätzlich nicht parallel zu der ersten und der zweiten Achse, sondern vorzugsweise senkrecht zu der ersten und/oder der zweiten Achse. Insbesondere kann die dritte Achse senkrecht zur Winkelhalbierenden zwischen der ersten und der zweiten Achse verlaufen. Dies kann die Belastung des Kugelgelenks verringern. Typischerweise verläuft die dritte Achse durch das Kugelgelenk.

Die Längsrichtung, in welcher das Führungselement steif ausgebildet ist, verläuft vorteilhafterweise unter einem Winkel von jeweils wenigstens 30° zu der ersten und der zweiten Achse. Das Führungselement kann sich insbesondere von der ersten zu der zweiten Justageeinrichtung erstrecken bzw. die Längsrichtung kann parallel zu einer Verbindungslinie der Justageeinrichtungen verlaufen.

Vorzugsweise ist das Führungselement als eine Blattfeder ausgebildet. Eine Blattfeder kann kostengünstig bereitgestellt werden und auf einfache Weise an der Haltestruktur und der Optikfassung befestigt werden. Zugleich ermöglicht eine Blattfeder eine präzise Führung der Optikfassung relativ zur Haltestruktur. Die Blattfeder ist in ihrer Längsrichtung steif, d. h. nicht nennenswert verformbar.

Wenigstens in einer quer zu der Längsrichtung verlaufenden Richtung ist die Blattfeder weich, d. h. signifikant verformbar. Typischerweise ist die Blattfeder um ihre Längsachse tordierbar.

Das Führungselement ist vom Kugelgelenk aus gesehen hinter der ersten und/oder der zweiten Justageeinrichtung angeordnet. Durch den großen Abstand des Führungselements vom Kugelgelenk kann eine besonders genaue Ausrichtung der Optikfassung bezüglich der zweiten Achse erreicht werden. Zudem kann dies die Montage der optischen Anordnung vereinfachen.

Um den dritten rotatorischen Freiheitsgrad des Kugelgelenks einzuschränken, könnte alternativ eine der Justageeinrichtungen zwei Freiheitsgrade einschränken und beispielsweise in der Art eines Scharniers ausgebildet sein.

Besonders bevorzugt ist vorgesehen, dass die Optikfassung eine Ausnehmung der Haltestruktur durchragt. Die Haltestruktur kann dann daran mitwirken, einen Raum, in dem das optische Element angeordnet ist, gegenüber einer Umgebung, in welcher die Justageeinrichtungen angeordnet - und für Justagezwecke leicht zugänglich - sind, abzudichten bzw. abzuschirmen.

Vorzugsweise umgreift die Haltestruktur die Optikfassung zwischen dem Kugelgelenk und den beiden Justageeinrichtungen allseitig. Dadurch kann eine besonders kompakte Konstruktion erhalten werden. Ferner kann dies die Anbindung der optischen Anordnung an eine weitere Struktur, beispielsweise ein Gehäuse, vereinfachen.

Vorzugsweise ist zwischen der Optikfassung und der Haltestruktur eine Gasdichtung angeordnet. Durch die Gasdichtung kann eine Schutzgasatmosphäre im Bereich des optischen Elements von Umgebungsluft im Bereich der Justageeinrichtungen getrennt werden. Die Gasdichtung liegt grundsätzlich berührend an der Optikfassung und an der Haltestruktur an.

An der Ausnehmung kann eine optische Abschirmung vorgesehen sein. Die optische Abschirmung verhindert ein Austreten von Strahlung aus dem Bereich des optischen Elements in die für Bedienpersonal zugängliche Umgebung. Vorzugsweise ist die optische Abschirmung mit einander überlappenden Blechelementen ausgebildet. Wenigstens eines der Blechelemente kann an der Haltestruktur gehalten sein. Wenigstens ein weiteres Blechelement kann an der Optikfassung gehalten sein.

Um beim Justieren nur geringe Bewegungen an der Gasdichtung bzw. der optischen Abschirmung hervorzurufen, ist die Ausnehmung der Haltestruktur, durch welche die Optikfassung hindurchragt, vorzugsweise nahe an dem Kugelgelenk angeordnet. Die Gasdichtung und/oder Teile der optischen Abschirmung können unmittelbar an der Ausnehmung angeordnet sein.

Die Optikfassung kann einen Kühlmittelkanal aufweisen. Indem Kühlmittel durch den Kühlmittelkanal geleitet wird, kann die Optikfassung und insbesondere das optische Element gekühlt werden. Durch den Kühlmittelkanal kann Kühlmittel, beispielsweise Kühlwasser, von einem ersten Kühlmittelanschluss der Optikfassung zu einem zweiten Kühlmittelanschluss der Optikfassung geleitet werden. Der Kühlmittelkanal kann sich unmittelbar an dem optischen Element vorbei erstrecken, wobei das optische Element eine Wandung des Kühlmittelkanals mit ausbilden kann.

Die erste und/oder die zweite Justageeinrichtung können zur Längenveränderung ausgebildet sein. Vorzugsweise ist die erste und/oder die zweite Justageeinrichtung mit einer ersten bzw. zweiten Justierschraube und einer ersten bzw. zweiten Haltemutter ausgebildet. Derart kann eine besonders präzise Ausrichtung der Optikfassung mit dem optischen Element relativ zu der Haltestruktur eingestellt werden. Zudem kann mit solchen Justageeinrichtungen ein unerwünschtes selbsttätiges Verstellen wirksam vermieden werden.

Die erste und/oder die zweite Justierschraube kann mit einem rotationselliptischen, insbesondere sphärischen, Kopfabschnitt ausgebildet sein, welcher sich in einer konischen Aufnahme, vorzugsweise der Optikfassung, abstützt. Bei dieser Gestaltung wird ein Linienkontakt zwischen der Justierschraube bzw. den Justierschrauben und der (jeweiligen) Aufnahme erhalten. Der Linienkontakt gewährleistet eine ausreichende Steifigkeit, um die präzise Ausrichtung der Optikfassung mit dem optischen Element auch bei Erschütterungen oder Stößen zu gewährleisten. Zudem verringert der Linienkontakt die Kontaktpressung zwischen dem Kopfabschnitt und der jeweiligen Aufnahme.

Die erste und/oder die zweite Haltemutter kann mit einer rotationselliptischen, insbesondere sphärischen Anlagefläche ausgebildet sein, welche sich in einer konischen Aufnahme, vorzugsweise der Haltestruktur, abstützt. Bei dieser Gestaltung wird ein Linienkontakt zwischen der Haltemutter bzw. den Haltemuttern und der (jeweiligen) Aufnahme erhalten. Der Linienkontakt gewährleistet eine ausreichende Steifigkeit, um die präzise Ausrichtung der Optikfassung mit dem optischen Element auch bei Erschütterungen oder Stößen zu gewährleisten. Zudem verringert der Linienkontakt die Kontaktpressung zwischen der Anlagefläche und der jeweiligen Aufnahme.

Vorzugsweise sind die Optikfassung und die Haltestruktur voneinander weg vorgespannt. Dadurch können die Optikfassung und die Haltestruktur spielfrei an die Justageeinrichtungen angekoppelt werden, ohne die Optikfassung zu verspannen. Die erste und/oder die zweite Justageeinrichtung kann ein erstes bzw. zweites Federelement aufweisen. Beim Verstellen der ersten bzw. zweiten Justageeinrichtung kann das jeweilige Federelement komprimiert bzw. expandiert werden. Das erste bzw. zweite Federelement kann die erste bzw. zweite Justierschraube umgreifen. Das erste bzw. zweite Federelement kann als eine, vorzugsweise zylindrische, Schraubenfeder ausgebildet sein. Die Vorspannung kann eine zuverlässige Anlage der Kopfabschnitte und der Anlageflächen an den jeweiligen Aufnahmen gewährleisten.

Eine Vorspannkraft an jeder der beiden Justageeinrichtungen kann beispielsweise wenigstens 100 N, bevorzugt wenigstens 120 N, besonders bevorzugt wenigstens 150 N, betragen. Mit solchermaßen bemessenen Vorspannkräften kann die spielfreie und präzise Ausrichtung auch bei Vibrationen und anderen auf die Optikfassung einwirkenden Kräften, beispielsweise durch Kühlwasserschläuche, gewährleistet werden. Typischerweise beträgt die Vorspannkraft an den Justageeinrichtungen jeweils weniger als 500 N. Eine Überlastung der Justageeinrichtungen kann dadurch vermieden werden.

Das Kugelgelenk kann mit einer Fixiermutter ausgebildet sein, welche auf einen Stehbolzen der Haltestruktur aufgeschraubt ist, und welche eine rotationselliptische, insbesondere sphärische Gelenkfläche aufweist, die sich in einer weiteren konischen Aufnahme der Optikfassung abstützt. Derart kann eine spielfreie und gegenüber Vibrationen und einwirkenden Kräften unempfindliche Lagerung der Optikfassung an der Haltestruktur eingerichtet werden. Typischerweise ist ein drittes Federelement vorgesehen, welches an dem Kugelgelenk die Optikfassung und die Haltestruktur voneinander weg vorspannt, vorzugswiese wobei das Federelement den Stehbolzen umgreift. Das dritte Federelement kann eine, vorzugsweise zylindrische, Schraubenfeder sein. Eine Vorspannkraft an dem Kugelgelenk kann wenigstens 100 N, bevorzugt wenigstens 120 N, besonders bevorzugt wenigstens 150 N, betragen. Mit einer solchermaßen bemessenen Vorspannkraft kann die spielfreie und präzise Ausrichtung auch bei Vibrationen und anderen auf die Optikfassung einwirkenden Kräften, beispielsweise durch Kühlwasserschläuche, gewährleistet werden. Typischerweise beträgt die Vorspannkraft an dem Kugelgelenk weniger als 500 N. Eine Überlastung des Kugelgelenks kann dadurch vermieden werden. Die Vorspannkraft am Kugelgelenk ist typischerweise größer als die Vorspannkraft an den Justageeinrichtungen. Das dritte Federelement kann eine größere Steifigkeit besitzen als das erste und das zweite Federelement. Da der Schwerpunkt der Optikfassung sich meist deutlich näher am Kugelgelenk befindet, kann dessen stärke Belastung hierdurch kompensiert werden.

Die optische Anordnung kann weiterhin eine Laserlichtquelle zum Aussenden eines Laserstrahls und ein Target aufweisen, wobei das optische Element im Strahlengang des Laserstrahls angeordnet ist, um den Laserstrahl auf das Target zu richten. Durch Bestrahlen des Targets mit dem Laserstrahl kann beispielsweise extrem ultraviolette Strahlung (Wellenlänge zwischen 10 nm und 121 nm) erhalten werden.

Weitere Merkmale und Vorteile der Erfindung ergeben sich aus der Beschreibung, den Ansprüchen und der Zeichnung. Erfindungsgemäß können die vorstehend genannten und die noch weiter ausgeführten Merkmale jeweils einzeln für sich oder zu mehreren in beliebigen, zweckmäßigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

### Detaillierte Beschreibung der Erfindung und Zeichnung

Die Erfindung ist in der Zeichnung dargestellt und wird anhand von Ausführungsbeispielen näher erläutert. Es zeigen:

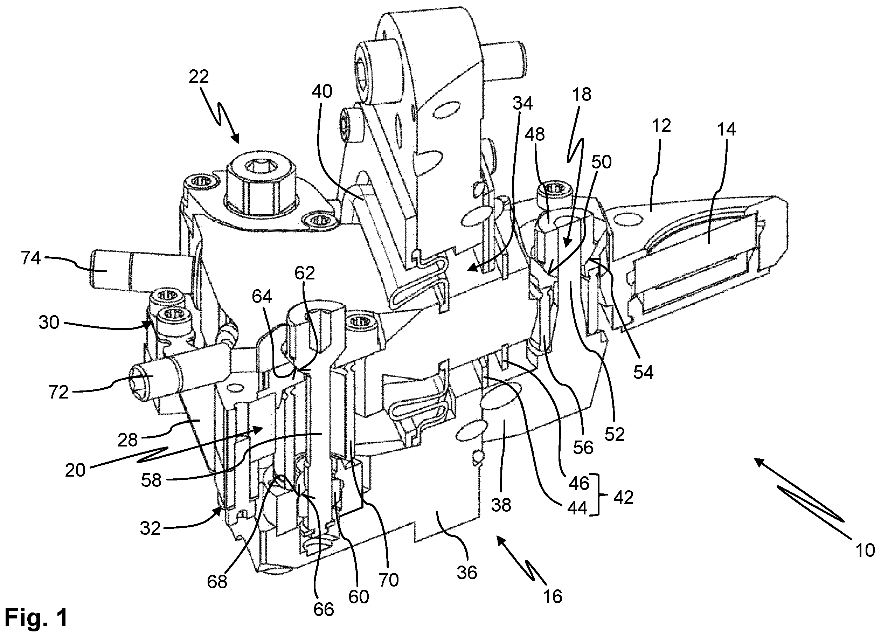

- Fig. 1: eine erfindungsgemäße optische Anordnung mit einem an einer Optikfassung gehaltenen optischen Element, welches über zwei Justageeinrichtungen gegenüber einer Haltestruktur justierbar ist, wobei die Haltestruktur die Optikfassung zwischen einem Kugelgelenk und den weiter vom optischen Element entfernten Justageeinrichtungen umgreift, in einer schematischen Schnittansicht;

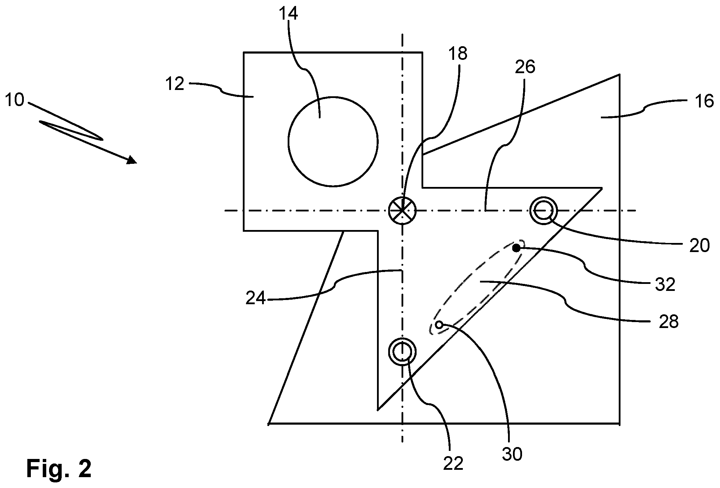

- Fig. 2: eine abstrahierte Prinzipskizze der justierbaren optischen Anordnung von Figur 1;

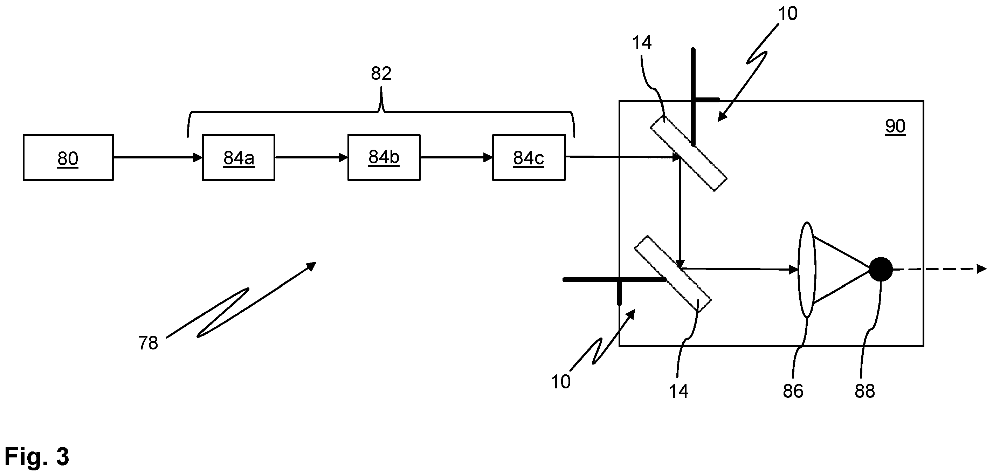

- Fig. 3: eine Vorrichtung zum Erzeugen von extrem ultravioletter Strahlung, bei welcher Laserstrahlung von einer Laserlichtquelle über zwei justierbare optische Anordnungen gemäß Figur 1 auf ein Target gerichtet wird, sodass extrem ultraviolette Strahlung emittiert wird, in einer schematischen Darstellung.

**Figur 1** zeigt eine justierbare optische Anordnung **10.** In **Figur 2** ist der Grundaufbau der optischen Anordnung 10 abstrakt dargestellt.

Die optische Anordnung 10 weist eine Optikfassung **12** auf. An der Optikfassung 12 ist ein optisches Element **14** gehalten. Das optische Element 14 ist hier ein Spiegel. Alternativ könnte das optische Element ein transmissives Element, beispielsweise ein Strahlteiler, sein (nicht näher dargestellt). Das optische Element 14 kann in eine Aufnahmeausnehmung der Optikfassung 12 eingesetzt sein.

Die optische Anordnung 10 weist ferner eine Haltestruktur **16** auf. Die Optikfassung 12 mit dem optischen Element 14 kann gegenüber der Haltestruktur 16 justiert werden. Um ein Verkippen der Optikfassung 12 gegenüber der Haltestruktur 16 zu ermöglichen, ist die Optikfassung 12 in einem Kugelgelenk **18** an der Haltestruktur 16 gehalten. Das Kugelgelenk 18 erlaubt eine rotatorische Relativbewegung der Optikfassung 12 gegenüber der Haltestruktur 16 in allen drei (rotatorischen) Freiheitsgraden. An dem Kugelgelenk 18 ist ein translatorisches Verschieben der Optikfassung 12 gegenüber der Haltestruktur 16 nicht möglich.

Die optische Anordnung 10 weist eine erste Justageeinrichtung **20** und eine zweite Justageeinrichtung **22** auf. Durch Betätigen der ersten Justageeinrichtung 20 ist die Optikfassung 12 um eine erste Achse **24** gegenüber der Haltestruktur 16 verschwenkbar. Durch Betätigen der zweiten Justageeinrichtung 22 ist die Optikfassung 12 um eine zweite Achse **26** gegenüber der Haltestruktur 16 verschwenkbar. Die erste Achse 24 ist hier durch eine Gerade durch das Kugelgelenk 18 und die zweite Justageeinrichtung 22 definiert. Die zweite Achse 26 ist hier durch eine Gerade durch das Kugelgelenk 18 und die erste Justageeinrichtung 20 definiert. Die erste und die zweite Achse 24, 26 können zwischen den beiden Justageeinrichtung 20, 22 einen Winkel von beispielsweise 90° einschließen. Es sind jedoch auch kleinere oder größere Winkel möglich.

Das Kugelgelenk 18 ist zwischen dem optischen Element 14 und der ersten sowie der zweiten Justageeinrichtung 20, 22 angeordnet. Ein Abstand, insbesondere eines Zentrums, des optischen Elements 14 von dem Kugelgelenk 18 ist dabei kleiner als ein Abstand (des Zentrums) des optischen Elements 14 von der ersten Justageeinrichtung 20. Ebenso ist der Abstand (des Zentrums) des optischen Elements 14 von dem Kugelgelenk 18 kleiner als ein Abstand (des Zentrums) des optischen Elements 14 von der zweiten Justageeinrichtung 22. Insbesondere liegt bei der dargestellten Ausführungsform derjenige Punkt auf der zweiten Achse 26, welcher den kleinsten Abstand vom optischen Element 14 (insbesondere von dessen Zentrum) aufweist, von der ersten Justageeinrichtung 20 aus gesehen jenseits des Kugelgelenks 18. Entsprechend liegt derjenige Punkt auf der ersten Achse 24, welcher den kleinsten Abstand vom optischen Element 14 (insbesondere von dessen Zentrum) aufweist, von der zweiten Justageeinrichtung 22 aus gesehen jenseits des Kugelgelenks 18. Vom optischen Element 14 aus gesehen sind die beiden Justageeinrichtung 20, 22 hinter dem Kugelgelenk 18 angeordnet.

Um die Ausrichtung der Optikfassung 12 zu der Haltestruktur 16 bezüglich Drehungen um eine dritte Achse zu definieren, ist ein Führungselement **28** vorgesehen. Die dritte Achse verläuft hier senkrecht zu der ersten und der zweiten Achse 24, 26 durch das Kugelgelenk 18 (in Figur 2 senkrecht zur Zeichenebene). Das Führungselement 28 kann als eine Blattfeder ausgebildet sein. Einenends ist das Führungselement 28 an einer ersten Befestigungsstelle **30** an der Haltestruktur 16 festgelegt. Anderenends ist das Führungselement 28 an einer zweiten Befestigungsstelle **32** an der Optikfassung 12 festgelegt. Eine Gerade durch die beiden Befestigungsstellen 30, 32 des Führungselements 28 verläuft von dem Kugelgelenk 18 beabstandet. Diese Gerade kann sich parallel zu einer Verbindungslinie der beiden Justageeinrichtungen 20, 22 erstrecken. Da das Führungselement 28 längssteif ausgebildet ist, verhindert es eine Drehung der Optikfassung 12 gegenüber der Haltestruktur 16 um die dritte Achse. Um den Abstand des Führungselements 28 von dem Kugelgelenk 18 zu vergrößern und somit eine besonders präzise Führung der Optikfassung 12 zu erhalten, kann das Führungselement 28 von dem optischen Element 14 aus gesehen hinter den beiden Justageeinrichtungen 20, 22 angeordnet sein.

Die Haltestruktur 16 kann eine Ausnehmung **34** aufweisen (vergleiche Figur 1), durch welche die Optikfassung 12 hindurchragt. Es sei angemerkt, dass die Haltestruktur 16 mehrteilig ausgebildet sein kann. Insbesondere können Angriffspunkte der beiden Justageeinrichtungen 20, 22 an der Haltestruktur 16 und die Ausnehmung 34 an einem ersten Bauteil **36** der Haltestruktur 16 vorgesehen sein. Das Kugelgelenk 18 kann an einem zweiten Bauteil **38** Haltestruktur 16 vorgesehen sein. Sofern die Haltestruktur 16 mehrteilig ausgebildet ist, sind ihre Bauteile 36, 38 fest miteinander verbunden und insbesondere nicht gegeneinander beweglich.

Die Optikfassung 12 ist hier mit einem einteiligen Grundkörper ausgebildet. Alternativ könnte ein Grundkörper der Optikfassung mehrteilig ausgebildet und insbesondere zwischen den Justageeinrichtungen 20, 22 und dem Kugelgelenk 18 bzw. dem optischen Element 14 geteilt sein (nicht näher dargestellt).

Im Bereich der Ausnehmung 34 umgreift die Haltestruktur 16 die Optikfassung 12 durchgängig umlaufend. An der Ausnehmung 34 kann eine Gasdichtung **40** vorgesehen sein. Die Gasdichtung 40 kann in der Art eines Faltenbalgs ausgebildet sein. Die Gasdichtung 40 trennt einen Raum, in welchem das optische Element 14 angeordnet ist und welcher typischerweise ein Schutzgas enthält, von einer Umgebung, in welcher die Justageeinrichtungen 20, 22 frei zugänglich sind.

An der Ausnehmung 34 kann ferner eine optische Abschirmung **42** vorgesehen sein. Die Abschirmung 42 verhindert, dass Licht, insbesondere Laserlicht, durch die Ausnehmung 34 in die Umgebung mit den Justageeinrichtungen 20, 22 gelangt. Die optische Abschirmung 42 kann wenigstens ein erstes Blechelement **44** aufweisen, welches an der Haltestruktur 16 befestigt ist. Die optische Abschirmung 42 kann ferner wenigstens ein zweites Blechelement **46** aufweisen, welches an der Optikfassung 12 befestigt ist. Die Blechelemente 44, 46 überlappen einander, sodass ein Austreten von Licht durch die Ausnehmung 34 nicht möglich ist.

Um beim Justieren der Optikfassung 12 relativ zu der Haltestruktur 16 geringe Bewegungen an der Gasdichtung 40 und der Abschirmung 42 hervorzurufen, ist die Ausnehmung 34 nahe an dem Kugelgelenk 18 angeordnet. Die Anordnung der Justageeinrichtungen 20, 22 außerhalb des durch die Haltestruktur 16 mit begrenzten Raums, in welchem sich das optische Element 14 befindet, ermöglicht es, die Ausnehmung 34 klein zu halten. Somit können auch die Gasdichtung 40 sowie die Abschirmung 42 mit einer geringen Umfangslänge ausgeführt sein.

Das Kugelgelenk 18 kann mit einer Fixiermutter **48** ausgebildet sein. Die Fixiermutter 48 weist eine sphärische Gelenkfläche **50** auf. Die Fixiermutter 48 ist im dargestellten Ausführungsbeispiel auf einen Stehbolzen **52** der Haltestruktur 16 aufgeschraubt. Der Stehbolzen 52 ist hier einstückig mit dem zweiten Bauteil 38 der Haltestruktur 16 ausgebildet. Die sphärische Gelenkfläche 50 der Fixiermutter 48 stützt sich in einer konischen Aufnahme **54** der Optikfassung 12 ab. Im Bereich des Kugelgelenks 18 sind die Optikfassung 12 und die Haltestruktur 16 durch ein Federelement **56** voneinander weg vorgespannt, welches in Figur 1 schematisch hülsenförmig dargestellt ist. Das Federelement 56 kann als eine Schraubenfeder ausgebildet sein. Das Federelement 56 kann den Stehbolzen 52 umgreifen. Die Vorspannung des Federelements 56 ist so groß gewählt, z.B. ca. 240 N, dass bei im Betrieb auftretenden Lasten eine linienhafte Berührung der Fixiermutter 48 und der konischen Aufnahme 54 stets gewährleistet ist. Durch diese Bauweise kann eine präzise, steife und leicht verstellbare Lagerung der Optikfassung 12 an der Haltestruktur 16 in dem Kugelgelenk 18 erhalten werden.

Die beiden Justageeinrichtungen 20, 22 können baugleich ausgeführt sein. Die Justageeinrichtungen 20, 22 können zur Veränderung eines Abstands zwischen ihren jeweiligen Angriffspunkten an der Optikfassung 12 und der Haltestruktur 16 ausgebildet sein. Die Justageeinrichtungen 20, 22 können mit anderen Worten zur Längenveränderung ausgebildet sein.

Die Justageeinrichtungen 20, 22 weisen hier jeweils eine Justierschraube **58** und eine Haltemutter **60** auf. Durch Drehen der Justierschraube 58 und der Haltemutter 60 gegeneinander ist die wirksame Länge der Justageeinrichtungen 20, 22 veränderbar. Die Justierschrauben 58 weisen jeweils einen sphärischen Kopfabschnitt **62** auf. Die sphärischen Kopfabschnitte 62 der Justierschrauben 58 können sich jeweils in einer (weiteren) konischen Aufnahme **64** der Optikfassung 12 abstützen. Die Haltemuttern 60 weisen jeweils eine sphärische Anlagefläche **66** auf. Die sphärischen Anlageflächen 66 der Haltemuttern 60 können sich jeweils in einer konischen Aufnahme **68** der Haltestruktur 16 abstützen. Es versteht sich, dass die Anordnung der Justierschrauben 58 und Haltemuttern 60 auch umgekehrt sein kann, sodass sich die Kopfabschnitte 62 an der Haltestruktur 16 und die Anlageflächen 66 an der Optikfassung abstützen (nicht dargestellt).

Im Bereich der Justageeinrichtungen 20, 22 sind die Optikfassung 12 und die Haltestruktur 16 durch Federelemente **70** voneinander weg vorgespannt. Das Federelement 70 der ersten Justageeinrichtung 20 ist in Figur 1 schematisch hülsenförmig dargestellt. Die Federelemente 70 können jeweils als eine Schraubenfeder ausgebildet sein. Die Federelemente 70 können jeweils die zugeordnete Justierschraube 58 umgreifen. Die Vorspannung der Federelemente 70 ist so groß gewählt, z.B. ca. 150 N, dass bei im Betrieb auftretenden Lasten eine linienhafte Berührung der Kopfabschnitte 22 sowie der Anlageflächen 66 und der jeweiligen konischen Aufnahmen 64, 68 stets gewährleistet ist. Durch diese Bauweise kann eine präzise, steife und statisch bestimmte Lagerung der Optikfassung 12 an der Haltestruktur 16 erhalten werden. Da die Justageeinrichtungen 20, 22 jeweils nur einen einzigen Freiheitsgrad einschränken bzw. einstellen, ist das Justieren der optischen Anordnung 10 einfach möglich und ein Verspannen der Optikfassung 12, welches sich nachteilig auf die Abbildungsqualität des optischen Element 14 auswirken könnte, kann zuverlässig vermieden werden.

Die zugleich steife und spannungsfreie Befestigung der Optikfassung 12 an der Haltestruktur 16 ermöglicht es, Kühlmittelschläuche (nicht dargestellt) an die Optikfassung 12 anzuschließen, ohne die Präzision der Ausrichtung der Optikfassung 12 mit dem optischen Element 14 zu beeinträchtigen. An der Optikfassung 12 sind hierzu zwei Kühlmittelanschlüsse **72, 74** vorgesehen. In der Optikfassung 12 verläuft ein nicht näher dargestellter Kühlmittelkanal. Der Kühlmittelkanal verbindet die beiden Kühlmittelanschlüsse 72, 74 miteinander. Es ist denkbar, dass der Kühlmittelkanal unmittelbar an dem optischen Element 14 vorbei verläuft und abschnittsweise durch dieses begrenzt wird.

**Figur 3** zeigt eine Vorrichtung **78** zum Erzeugen extrem ultravioletter Strahlung. Die Vorrichtung weist eine Laserlichtquelle **80** und eine Verstärkeranordnung **82** mit drei optischen Verstärkerstufen **84a, 84b, 84c** auf. Ein von der Laserlichtquelle 80 ausgesandter und durch die Verstärkeranordnung 82 verstärkter Laserstrahl wird mittels zweier zuvor beschriebener justierbarer optischer Anordnungen 10 und einer Fokussieroptik **86** auf ein Target **88** gerichtet. Die Fokussieroptik 86 kann eine Linse sein. Das Target 88 kann aus Zinn bestehen. Das Material des Targets 88 geht bei der Bestrahlung mit dem Laserstrahl in einen Plasmazustand über und emittiert extrem ultraviolette Strahlung (vergleiche gestrichelter Pfeil).

Zumindest das Target 88, die Fokussieroptik 86 und die optischen Elemente 14 der beiden optischen Anordnungen 10 sind in einer Vakuumkammer **90** angeordnet. Die Vakuumkammer 90 kann ein Schutzgas mit niedrigem Druck enthalten. Eine Wandung der Vakuumkammer 90 kann durch die Bereiche der Haltestrukturen 16, welche die Ausnehmung 34 aufweisen, mit ausgebildet sein. Die Haltestrukturen 16 können außerhalb der Vakuumkammer 90 oder an deren Wandung befestigt sein. Die Optikfassungen 12 durchragen die Wandung der Vakuumkammer 90 an den Ausnehmung 34 der Haltestrukturen 16. Die optischen Elemente 14 und hier auch die Kugelgelenke 18 sind jeweils innerhalb der Vakuumkammer 90 angeordnet. Die Justageeinrichtungen 20, 22 und hier auch die Kühlmittelanschlüsse 72, 74 sind jeweils außerhalb der Vakuumkammer 90 angeordnet. Die Justageeinrichtungen 20, 22 sind daher für Justagezwecke leicht zugänglich.

### Bezugszeichenliste

Justierbare optische Anordnung **10**
Optikfassung **12**
optisches Element **14**
Haltestruktur **16**
Kugelgelenk **18**
erste Justageeinrichtung **20**
zweite Justageeinrichtung **22**
erste Achse **24**
zweite Achse **26**
Führungselement **28**
erste Befestigungsstelle **30** des Führungselement 28
zweite Befestigungsstelle **32** des Führungselement 28
Ausnehmung **34**
erstes Bauteil **36** der Haltestruktur 16
zweites Bauteil **38** der Haltestruktur 16
Gasdichtung **40**
Abschirmung **42**
erstes Blechelement **44** der Abschirmung 42
zweites Blechelement **46** der Abschirmung 42
Fixiermutter **48**
Gelenkfläche **50** der Fixiermutter 48
Stehbolzen **52**
Aufnahme **54** der Optikfassung 12
Federelement **56** des Kugelgelenks 18
Justierschraube **58**
Haltemutter **60**
Kopfabschnitt **62**
weitere Aufnahme **64** der Optikfassung 12
Anlagefläche **66**
Aufnahme **68** der Haltestruktur 16
Federelemente **70** der Justageeinrichtungen 20, 22
Kühlmittelanschlüsse **72, 74**
Vorrichtung **78** zum Erzeugen extrem ultravioletter Strahlung
Laserlichtquelle **80**
Verstärkeranordnung **82**
Verstärkerstufen **84a, 84b, 84c**
Fokussieroptik **86**
Target **88**
Vakuumkammer **90**

## Patentansprüche

1. Justierbare optische Anordnung (10) aufweisend
- eine Optikfassung (12),
- ein optisches Element (14), das an der Optikfassung (12) gehalten ist,
- eine Haltestruktur (16),
wobei die Optikfassung (12) in einem Kugelgelenk (18) an der Haltestruktur (16) gehalten ist,
wobei eine erste Justageeinrichtung (20) vorgesehen ist, um die Optikfassung (12) um eine erste Achse (24) gegenüber der Haltestruktur (16) zu verschwenken,
wobei eine zweite Justageeinrichtung (22) vorgesehen ist, um die Optikfassung (12) um eine zweite Achse (26) gegenüber der Haltestruktur (16) zu verschwenken,
wobei das Kugelgelenk (18) zwischen dem optischen Element (14) und der ersten und der zweiten Justageeinrichtung (20, 22) angeordnet ist, **dadurch gekennzeichnet,**
**dass** die Optikfassung (12) durch ein längssteifes Führungselement (28) an der Haltestruktur (16) geführt ist,
und **dass** das Führungselement (28) vom Kugelgelenk (18) aus gesehen hinter der ersten und/oder der zweiten Justageeinrichtung (20, 22) angeordnet ist.

2. Anordnung (10) nach Anspruch 1, **dadurch gekennzeichnet, dass** das Führungselement (28) als eine Blattfeder ausgebildet ist.

3. Anordnung (10) nach einem der vorhergehenden Ansprüche, **dadurch gekennzeichnet, dass** die Optikfassung (12) eine Ausnehmung (34) der Haltestruktur (16) durchragt.

4. Anordnung (10) nach Anspruch 3, **dadurch gekennzeichnet, dass** die Haltestruktur (16) die Optikfassung (12) zwischen dem Kugelgelenk (18) und den beiden Justageeinrichtungen (20, 22) umgreift.

5. Anordnung (10) nach Anspruch 3 oder 4, **dadurch gekennzeichnet, dass** zwischen der Optikfassung (12) und der Haltestruktur (16) eine Gasdichtung (40) angeordnet ist.

6. Anordnung (10) nach einem der Ansprüche 3 bis 5, **dadurch gekennzeichnet, dass** eine optische Abschirmung (42), vorzugsweise mit einander überlappenden Blechelementen (44, 46), an der Ausnehmung (34) vorgesehen ist.

7. Anordnung (10) nach einem der vorhergehenden Ansprüche, **dadurch gekennzeichnet, dass** die Optikfassung (12) einen Kühlmittelkanal aufweist.

8. Anordnung (10) nach einem der vorhergehenden Ansprüche, **dadurch gekennzeichnet, dass** die erste und/oder die zweite Justageeinrichtung (20, 22) mit einer ersten bzw. zweiten Justierschraube (58) und einer ersten bzw. zweiten Haltemutter (60) ausgebildet ist.

9. Anordnung (10) nach Anspruch 8, **dadurch gekennzeichnet, dass** die erste und/oder die zweite Justierschraube (58) mit einem rotationselliptischen, insbesondere sphärischen Kopfabschnitt (62) ausgebildet ist, welcher sich in einer konischen Aufnahme (64), vorzugsweise der Optikfassung (12), abstützt.

10. Anordnung (10) nach Anspruch 8 oder 9, **dadurch gekennzeichnet, dass** die erste und/oder die zweite Haltemutter (60) mit einer rotationselliptischen, insbesondere sphärischen Anlagefläche (66) ausgebildet ist, welche sich in einer konischen Aufnahme (68), vorzugsweise der Haltestruktur (16), abstützt.

11. Anordnung (10) nach einem der vorhergehenden Ansprüche, **dadurch gekennzeichnet, dass** die Optikfassung (12) und die Haltestruktur (16) voneinander weg vorgespannt sind, vorzugsweise wobei die erste und/oder die zweite Justageeinrichtung (20, 22) ein Federelement (70) aufweist.

12. Anordnung (10) nach Anspruch 11, **dadurch gekennzeichnet, dass** eine Vorspannkraft an jeder der beiden Justageeinrichtungen (20, 22) wenigstens 100 N, bevorzugt wenigstens 120 N, besonders bevorzugt wenigstens 150 N, beträgt.

13. Anordnung (10) nach einem der vorhergehenden Ansprüche, **dadurch gekennzeichnet, dass** das Kugelgelenk (18) mit einer Fixiermutter (48) ausgebildet ist, welche auf einen Stehbolzen (52) der Haltestruktur (16) aufgeschraubt ist, und welche eine rotationselliptische, insbesondere sphärische Gelenkfläche (50) aufweist, die sich in einer konischen Aufnahme (54) der Optikfassung (12) abstützt.

14. Anordnung (10) nach einem der vorhergehenden Ansprüche, weiterhin aufweisend eine Laserlichtquelle (80) zum Aussenden eines Laserstrahls und ein Target (88), wobei das optische Element (14) im Strahlengang des Laserstrahls angeordnet ist, um den Laserstrahl auf das Target (88) zu richten.

## Claims

1. An adjustable optical arrangement (10) comprising
- an optic mounting (12),
- an optical element (14), which is held on the optic mounting (12),
- a holding structure (16),
wherein the optic mounting (12) is held in a ball joint (18) on the holding structure (16),
wherein a first adjustment device (20) is provided to pivot the optic mounting (12) about a first axis (24) opposite the holding structure (16),
wherein a second adjustment device (22) is provided, to pivot the optic mounting (12) about a second axis (26) opposite the holding structure (16),
wherein the ball joint (18) is arranged between the optical element (14) and the first and second adjustment device (20, 22),
**characterized in that**
the optic mounting (12) is guided through a longitudinally rigid guide element (28) on the holding structure (16),
and **in that** the guide element (28) is arranged from the point of view of the ball joint (18) behind the first and/or the second adjustment device (20, 22).

2. The arrangement (10) according to claim 1, **characterized in that** the guide element (28) is designed as a leaf spring.

3. The arrangement (10) according to any one of the preceding claims, **characterized in that** the optic mounting (12) protrudes through a recess (34) of the holding structure (16).

4. The arrangement (10) according to claim 3, **characterized in that** the holding structure (16) encompasses the optic mounting (12) between the ball joint (18) and the two adjustment devices (20, 22).

5. The arrangement (10) according to claim 3 or 4, **characterized in that** a gas seal (40) is arranged between the optic mounting (12) and the holding structure (16).

6. The arrangement (10) according to one of the claims 3 to 5, **characterized in that** an optical shielding (42), preferably with sheet metal elements (44, 46) overlapping each other, is provided on the recess (34).

7. The arrangement (10) according to any one of the preceding claims, **characterized in that** the optic mounting (12) has a coolant channel.

8. The arrangement (10) according to any one of the preceding claims, **characterized in that** the first and/or the second adjustment device (20, 22) is designed with a first or, respectively, second adjustment screw (58) and a first or, respectively, second retaining nut (60).

9. The arrangement (10) according to claim 8, **characterized in that** the first and/or the second adjustment screw (58) is designed with a rotationally elliptical, in particular spherical, head section (62), which is supported in a conical receptacle (64), preferably of the optic mounting (12).

10. The arrangement (10) according to claim 8 or 9, **characterized in that** the first and/or the second retaining nut (60) is/are designed with a rotationally elliptical, in particular spherical, contact surface (66), which is supported in a conical receptacle (68), preferably of the holding structure (16).

11. The arrangement (10) according to any one of the preceding claims, **characterized in that** the optic mounting (12) and the holding structure (16) are prestressed away from one another, preferably wherein the first and/or the second adjustment device (20, 22) has a spring element (70).

12. The arrangement (10) according to claim 11, **characterized in that** a prestressing force on each of the two adjustment devices (20, 22) is at least 100 N, preferably at least 120 N, particularly preferably at least 150 N.

13. The arrangement (10) according to any one of the preceding claims, **characterized in that** the ball joint (18) is designed with a fixing nut (48), which is screwed onto a stud bolt (52) of the holding structure (16) and which has a rotationally elliptical, in particular spherical, articular surface (50), which is supported in a conical receptacle (54) of the optic mounting (12).

14. The arrangement (10) according to any one of the preceding claims, further having a laser light source (80) for emitting a laser beam and a target (88), wherein the optical element (14) is arranged in the beam path of the laser beam, so as to direct the laser beam to the target (88).

## Revendications

1. Agencement optique réglable (10) présentant
- une monture optique (12),
- un élément optique (14) qui est maintenu sur la monture optique (12),
- une structure de maintien (16),
dans lequel la monture optique (12) est maintenue dans une rotule (18) au niveau de la structure de maintien (16),
dans lequel un premier dispositif de réglage (20) est prévu pour faire pivoter la monture optique (12) autour d'un premier axe (24) par rapport à la structure de maintien (16),
dans lequel un deuxième dispositif de réglage (22) est prévu pour faire pivoter la monture optique (12) autour d'un deuxième axe (26) par rapport à la structure de maintien (16),
dans lequel la rotule (18) est agencée entre l'élément optique (14) et les premier et deuxième dispositifs de réglage (20, 22),
**caractérisé en ce que**
la monture optique (12) est guidée sur la structure de maintien (16) par un élément de guidage (28) longitudinalement rigide,
et **en ce que** l'élément de guidage (28) est agencé derrière le premier et/ou le deuxième dispositif de réglage (20, 22) vu depuis la rotule (18).

2. Agencement (10) selon la revendication 1, **caractérisé en ce que** l'élément de guidage (28) est conçu comme une lame ressort.

3. Agencement (10) selon l'une quelconque des revendications précédentes, **caractérisé en ce que** la monture optique (12) traverse un évidement (34) de la structure de maintien (16).

4. Agencement (10) selon la revendication 3, **caractérisé en ce que** la structure de maintien (16) entoure la monture optique (12) entre la rotule (18) et les deux dispositifs de réglage (20, 22).

5. Agencement (10) selon la revendication 3 ou 4, **caractérisé en ce qu'**un joint d'étanchéité au gaz (40) est agencé entre la monture optique (12) et la structure de maintien (16).

6. Agencement (10) selon l'une quelconque des revendications 3 à 5, **caractérisé en ce qu'**un écran optique (42), préférablement avec des éléments en tôle (44, 46) se chevauchant, est prévu au niveau de l'évidement (34).

7. Agencement (10) selon l'une quelconque des revendications précédentes, **caractérisé en ce que** la monture optique (12) présente un canal de refroidissement.

8. Agencement (10) selon l'une quelconque des revendications précédentes, **caractérisé en ce que** le premier et/ou le deuxième dispositif de réglage (20, 22) sont conçus avec une première ou une deuxième vis de réglage (58) et un premier ou un deuxième écrou de maintien (60).

9. Agencement (10) selon la revendication 8, **caractérisé en ce que** la première et/ou la deuxième vis de réglage (58) sont conçues avec une portion de tête à section elliptique de révolution, en particulier sphérique (62), laquelle prend appui dans un logement conique (64), préférablement de la monture optique (12).

10. Agencement (10) selon la revendication 8 ou 9, **caractérisé en ce que** le premier et/ou le deuxième écrou de maintien (60) sont conçus avec une surface d'appui (66) à section elliptique de révolution, en particulier sphérique, laquelle prend appui dans un logement conique (68), préférablement de la structure de maintien (16).

11. Agencement (10) selon l'une quelconque des revendications précédentes, **caractérisé en ce que** la monture optique (12) et la structure de maintien (16) sont précontraintes l'une par rapport à l'autre, préférablement dans lequel le premier et/ou le deuxième dispositif de réglage (20, 22) présentent un élément à ressort (70).

12. Agencement (10) selon la revendication 11, **caractérisé en ce qu'**une force de précontrainte sur chacun des deux dispositifs de réglage (20, 22) est d'au moins 100 N, préférablement d'au moins 120 N, particulièrement préférablement d'au moins 150 N.

13. Agencement (10) selon l'une quelconque des revendications précédentes, **caractérisé en ce que** la rotule (18) est conçue avec un écrou de maintien (48), lequel est vissé sur un goujon fileté (52) de la structure de maintien (16) et lequel présente une surface d'articulation à section elliptique de révolution, en particulier sphérique (50), qui prend appui dans un logement conique (54) de la monture optique (12).

14. Agencement (10) selon l'une quelconque des revendications précédentes, présentant en outre une source de lumière laser (80) pour émettre un faisceau laser et une cible (88), dans lequel l'élément optique (14) est agencé dans le trajet du faisceau laser afin de diriger le faisceau laser vers la cible (88).
